(19) Europäisches Patentamt
European Patent Office
Office européen des brevets

(11) EP 4 351 340 B1

(12) # EUROPEAN PATENT SPECIFICATION

(45) Date of publication and mention of the grant of the patent:
**12.11.2025 Bulletin 2025/46**

(21) Application number: **22731182.6**

(22) Date of filing: **31.05.2022**

(51) International Patent Classification (IPC):
***A01N 43/58*** $^{(2006.01)}$ ***A01N 25/14*** $^{(2006.01)}$
***A01P 7/02*** $^{(2006.01)}$

(52) Cooperative Patent Classification (CPC):
(C-Sets available)
**A01N 43/58; A01P 7/02** (Cont.)

(86) International application number:
**PCT/EP2022/064667**

(87) International publication number:
**WO 2022/258424 (15.12.2022 Gazette 2022/50)**

(54) **WATER-DISPERSIBLE GRANULE OF DIMPROPYRIDAZ**

WASSERDISPERGIERBARES GRANULAT VON DIMPROPYRIDAZ

GRANULE DE DIMPROPYRIDAZ DISPERSIBLE DANS L’EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2021 EP 21179098**

(43) Date of publication of application:
**17.04.2024 Bulletin 2024/16**

(73) Proprietor: **BASF SE**
**67056 Ludwigshafen am Rhein (DE)**

(72) Inventors:
- **XU, Wen**
**Research Triangle Park, North Carolina 27709 (US)**
- **BENTON, Kara Walden**
**Research Triangle Park, North Carolina 27709 (US)**
- **CHYLINSKI, Raymond M**
**Research Triangle Park, North Carolina 27709 (US)**

(74) Representative: **BASF IP Association**
**BASF SE**
**GBI - Z078**
**67056 Ludwigshafen (DE)**

(56) References cited:
**EP-A1- 1 908 348**
**WO-A1-2012/143317**
**WO-A1-2020/144308**
**WO-A1-2020/224944**
**CA-A- 1 202 500**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 351 340 B1

(52) Cooperative Patent Classification (CPC): (Cont.)

C-Sets
**A01N 43/58, A01N 25/00, A01N 25/14**

## Description

The invention relates to water-dispersible granules containing dimpropyridaz; it also relates to a process for producing the granules; to an aqueous composition obtained by contacting the granules and water; to a method for to a method of treating plant propagation material; to a non-therapeutic method
for treating or protecting an animal from infestation or infection by invertebrate pests; to a method for combating or controlling invertebrate pests; and to a method for protecting growing plants from attack or infestation by invertebrate pests.

Water-dispersible granules ("WG") are a common formulation type for pesticidal compounds. WG formulations are easy to handle for the user, do not contain organic solvents, have long half-life time spans, and display a high active per mass ratio. The WG formulations are typically added to water before application, such as in an aqueous tank mix. The granules then disintegrate and their ingredients dissolve or get dispersed in the aqueous continuous phase. It is generally desirable to produce granules that can be easily dispersed in an aqueous medium, and that the such produced aqueous dispersion remains homogenous. Settling of particles leads to a non-continuous application rate, and the settled particles may influence the viscosity profile of the aqueous composition such that the spray nozzles tend to clog. So in case the aqueous composition shows signs of sedimentation, it would be desirable to facilitate re-dispersibility of the sediment to restore a homogeneous composition.

As for the solid WG formulation, the granules have the general advantage over powders of a reduced dust formation. Inhalation of WG formulations may be harmful to the applicant and so it is desirable to reduce dust formation as far as possible. WG formulations may generate dust by friction processes between particles. Friction can be influence by modifying the surface of the granules, e.g. by creating even surfaces, and by enhancing the integrity of the granules, i.e. reducing the tendency to crack or crumble apart under external forces.

The present invention relates to water-dispersible granules containing the insecticide dimpropyridaz. The granules have a high dispersibility in aqueous compositions, show little dust formation, and generate physically stable aqueous compositions. These effects were achieved by supplying a water-dispersible granule comprising

a) dimpropyridaz;
b) dioctylsulfosuccinate;
c) alkylnaphthalenesulfonate formaldehyde condensate;
d) a lignin sulfonate I, wherein the sulfonylation is at the aliphatic moieties of lignin backbone;
e) a lignin sulfonate II, wherein the sulfonylation is at least at the aromatic moieties of the lignin backbone.

It was surprisingly discovered that the combination of additives b)-e) confers the above described advantages. Omission of even one of the additives results in a significant deterioration of the desired effects, which cannot be restored by the modification of the concentration of the other components.

Dimpropyridaz is the common name of compound 1-[1,2-dimethylpropyl]-*N*-ethyl-5-methyl-*N*-pyridazin-4-yl-1*H*-pyrazole-4-carboxamide. Dimpropyridaz has a center of chirality, and in turn two enantiomers have been described (see ip.com IPCOM000256756D), 1-[(1*R*)-1,2-dimethylpropyl]-*N*-ethyl-5-methyl-*N*-pyridazin-4-yl-1*H*-pyrazole-4-carboxamide (hereinafter referred to as "R-enantiomer"), and 1-[(1*S*)-1,2-dimethylpropyl]-*N*-ethyl-5-methyl-*N*-pyridazin-4-yl-1*H*-pyrazole-4-carboxamide (hereinafter referred to as "S-enantiomer"). The S-enantiomer and the R-enantiomer are depicted by formulae I-A and I-B, respectively:

I-A 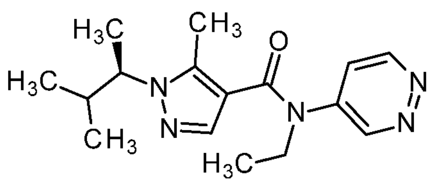 I-B 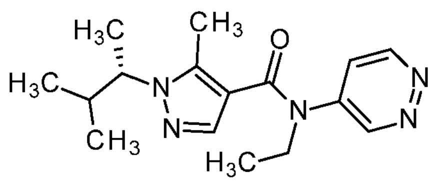

Accordingly, the term "dimpropyridaz" as used herein refers to the S-enantiomer, the R-enantiomer, and racemic mixtures thereof. Preferably, the term dimpropyridaz refers to racemic mixtures of the S-enantiomer and the R-enantiomer.

The water-dispersible granule typically contains particles comprising dimpropyridaz. Dimpropyridaz occurs in at least two crystal forms, which are hereinafter referred to as "polymorph A" and "polymorph B", as for example disclosed in WO2020/144308 A1.

Dimpropyridaz, its activity against arthropod pests and general procedures for its production are known from WO2012/143317. Applying these general procedures to the production of dimpropyridaz yield this compound as a glassy melt, which contains the polymorph A. The suspended particles comprising dimpropyridaz typically relate to suspended crystalline particles of dimpropyridaz that are of polymorph A, polymorph B, or a mixture thereof. In one embodiment, the

suspended particles comprising dimpropyridaz relates to suspended crystalline particles of dimpropyridaz in the polymorph A form. In another embodiment, the suspended particles comprising dimpropyridaz relates to suspended crystalline particles of dimpropyridaz in the polymorph B form.

The polymorph A can be identified and distinguished from form B by powder X-ray diffractometry. The PXRD pattern of the polymorph form A recorded using Cu-Kα radiation (1.54178 Å) at 25°C displays at least 3 of the following reflections, quoted as 2θ values: 16.16 ± 0.10°, 20.36 ± 0.10°, 23.92 ± 0.10°, 24. 29 ± 0.10° and 27.43 ± 0.10°. These reflections are not present in the form B. In addition to these 5 reflections, the polymorph A may display in such a diagram one or more, in particular at least 2, often at least 4, in particular at least 6 or at least 8 reflections and especially all of the reflections quoted hereinafter as 2θ values: 7.95 ± 0.10°, 10.16 ± 0.10°, 12.40 ± 0.10°, 15.31 ± 0.10°, 15.89 ± 0.10°, 16.53 ± 0.10°, 18.02 ± 0.10°, 19.25 ± 0.10°, 20.93 ± 0.10°, 23.44 ± 0.10°, 23.70 ± 0.10°, 26.16 ± 0.10°, 30.71 ± 0.10° and 32.92 ± 0.10°.

From amongst the peaks of PXRD pattern of the polymorph A, those at the following 2θ values are the most prominent ones: 10.16 ± 0.10°, 15.31 ± 0.10°, 15.89 ± 0.10°, 16.16 ± 0.10°, 16.53 ± 0.10°, 19.25 ± 0.10°, 20.36 ± 0.10°, 20.93 ± 0.10°, 23.44 ± 0.10°, 23.70 ± 0.10°, 23.92 ± 0.10°, 224. 29 ± 0.10°, 26.16 ± 0.10°, 30.71 ± 0.10° and 32.92 ± 0.10°.

When analyzed by differential scanning calorimetry (DSC) polymorph A displays a thermogram with a characteristic endothermic peak, also referred to as melting peak. The melting point, determined as the onset of the melting peak, typically lies in the range from about 82°C to 87°C. The values quoted here relate to values determined by DSC using an aluminum closed cup with a sample size of 1 to 10 mg and applying a heating rate of 10 K/min.

Thermogravimetric analysis, hereinafter also referred to as TGA, revealed that no weight loss occurs on heating, which indicates that form A does not contain solvent.

The polymorph B is obtainable as described in EP Application number 19151447.0. Polymorph B can be identified by powder X-ray diffractometry on the basis of its powder X-ray diffraction diagram, hereinafter also termed powder X-ray diffraction pattern or PXRD pattern, of the polymorph B recorded using Cu-Kα radiation (1.54178 Å) at 25°C displays the 3 following reflections, quoted as 2θ values: 20.69 ± 0.10°, 24.15 ± 0.10° and 30.52 ± 0.10°. In addition to these 3 reflections, the polymorph B may display in such a PXRD pattern one or more, in particular at least 2, often at least 4, in particular at least 6 or at least 8 reflections and especially all of the reflections quoted hereinafter as 2θ values: 7.99 ± 0.10°, 10.07 ± 0.10°, 12.38 ± 0.10°, 15.31 ± 0.10°, 15.97 ± 0.10°, 16.50 ± 0.10°, 18.03 ± 0.10°, 19.29 ± 0.10°, 20.22 ± 0.10°, 20.96 ± 0.10°, 23.40 ± 0.10°, 23.70 ± 0.10°, 26.09 ± 0.10°, 27.26 ± 0.10° and 32.91 ± 0.10°.

From amongst these reflections, preferably at least 1, in particular at least 2, more particularly at least 4, especially at least 6 or all of the following reflections, quoted as 2θ values, can be observed in such a PXRD pattern: 10.07 ± 0.10°, 15.31 ± 0.10°, 15.97 ± 0.10°, 16.50 ± 0.10°, 19.29 ± 0.10°, 20.22 ± 0.10°, 20.96 ± 0.10° and 26.09 ± 0.10°. In addition to these reflections preferably least 1, in particular at least 2, more particularly at least 4, especially at least 6 or all of the following reflections, quoted as 2θ values, can be observed in such a PXRD pattern: 7.99 ± 0.10°, 12.38 ± 0.10°, 18.03 ± 0.10°, 23.40 ± 0.10°, 23.70 ± 0.10°, 27.26 ± 0.10° and 32.91 ± 0.10°.

Frequently, a PXRD pattern of the polymorph form B recorded using Cu-Kα radiation (1.54178 Å) at 25°C displays the 3 following reflections, quoted as 2θ values: 20.69 ± 0.10°, 24.15 ± 0.10° and 30.52 ± 0.10° and additionally the following reflections, quoted as 2θ values: 15.31 ± 0.10°, 15.97 ± 0.10° and 16.50 ± 0.10°.

Alternatively, a PXRD pattern of the polymorph form B recorded using Cu-Kα radiation (1.54178 Å) at 25°C displays the 3 following reflections, quoted as 2θ values: 20.69 ± 0.10°, 24.15 ± 0.10° and 30.52 ± 0.10° and additionally the following reflections, quoted as 2θ values: 23.40 ± 0.10° and 23.70 ± 0.10°.

In particular, a PXRD pattern of the polymorph form B recorded using Cu-Kα radiation (1.54178 Å) at 25°C displays the 3 following reflections, quoted as 2θ values: 20.69 ± 0.10°, 24.15 ± 0.10° and 30.52 ± 0.10° and additionally the following reflections, quoted as 2θ values: 15.31 ± 0.10°, 15.97 ± 0.10°, 16.50 ± 0.10°, 23.40 ± 0.10° and 23.70 ± 0.10°.

When analyzed by differential scanning calorimetry (DSC) polymorph B of the present invention displays a thermogram with a characteristic endothermic peak, also referred to as melting peak. The melting point, determined as the onset of the melting peak, typically lies in the range from about 80°C to 90°C, in particular in the range from 82°C to 89°C. The values quoted here relate to values determined by DSC using an aluminum closed cup with a sample size of 1 - 10 mg and applying a heating rate of 10 K/min. Thermogravimetric analysis, hereinafter also referred to as TGA, revealed that no weight loss occurs on heating, which confirmed the findings of the single crystal X-ray studies that polymorph B does not contain solvent.

The water-dispersible granule usually contains dimpropyridaz in a concentration of from 10 to 90 wt%, preferably 20 to 80 wt%, more preferably 30 to 60 wt% based on the total weight of the water-dispersible granule. The water-dispersible granule may contain dimpropyridaz in a concentration of at least 25 wt%, preferably at least 35 wt% based on the total weight of the water-dispersible granule. The water-dispersible granule may contain dimpropyridaz in a concentration of up to 75 wt%, preferably up to 65 wt%, more preferably up to 55 wt% based on the total weight of the water-dispersible granule.

The water-dispersible granule may contain a further agrochemical active. The term "agrochemical active" refers to a substance that confers a desirable biological activity to the agrochemical formulation. Typically, the further agrochemical active is a pesticide. Agrochemical actives may be selected from fungicides, insecticides, nematicides, herbicides, safeners, nitrification inhibitors, urease inhibitors, plant growth regulators, micronutrients, biopesticides and/or growth regulators. In one embodiment, the agrochemical active is an insecticide. In another embodiment, the agrochemical active is a fungicide. In yet another embodiment the agrochemical active is a herbicide. The skilled worker is familiar with such pesticides, which can be found, for example, in the Pesticide Manual, 16th Ed. (2013), The British Crop Protection Council, London. Suitable insecticides are insecticides from the class of the carbamates, organophosphates, organochlorine insecticides, phenylpyrazoles, pyrethroids, neonicotinoids, spinosins, avermectins, milbemycins, juvenile hormone analogs, alkyl halides, organotin compounds nereistoxin analogs, benzoylureas, diacylhydrazines, METI acarizides, and insecticides such as chloropicrin, pymetrozin, flonicamid, clofentezin, hexythiazox, etoxazole, diafenthiuron, propargite, tetradifon, chlorofenapyr, DNOC, buprofezine, cyromazine, amitraz, hydramethylnon, acequinocyl, fluacrypyrim, rotenone, or their derivatives. Suitable fungicides are fungicides from the classes of dinitroanilines, allylamines, anilinopyrimidines, antibiotics, aromatic hydrocarbons, benzene-sulfonamides, benzimidazoles, benzisothiazoles, benzophenones, benzothiadiazoles, benzotri-azines, benzyl carbamates, carbamates, carboxamides, carboxylic acid diamides, chloronitriles cyanoacetamide oximes, cyanoimidazoles, cyclopropanecarboxamides, dicarboximides, dihy-drodioxazines, dinitrophenyl crotonates, dithiocarbamates, dithiolanes, ethylphosphonates, ethylaminothiazolecarboxamides, guanidines, hydroxy-(2-amino)pyrimidines, hydroxyanilides, imidazoles, imidazolinones, inorganic substances, isobenzofuranones, methoxyacrylates, methoxycarbamates, morpholines, N-phenylcarbamates, oxazolidinediones, oximinoacetates, oximinoacetamides, peptidylpyrimidine nucleosides, phenylacetamides, phenylamides, phenylpyrroles, phenylureas, phosphonates, phosphorothiolates, phthalamic acids, phthalimides, piperazines, piperidines, propionamides, pyridazinones, pyridines, pyridinylmethylbenzamides, pyrimidinamines, pyrimidines, pyrimidinonehydrazones, pyrroloquinolinones, quinazolinones, quinolines, quinones, sulfamides, sulfamoyltriazoles, thiazolecarboxamides, thiocarbamates, thiophanates, thiophenecarboxamides, toluamides, triphenyltin compounds, triazines, triazoles. Suitable herbicides are herbicides from the classes of the acetamides, amides, aryloxyphenoxypropionates, benzamides, benzofuran, benzoic acids, benzothiadiazinones, bipyridylium, carbamates, chloroacetamides, chlorocarboxylic acids, cyclohexanediones, dinitroanilines, dinitrophenol, diphenyl ether, glycines, imidazolinones, isoxazoles, isoxazolidinones, nitriles, N-phenylphthalimides, oxadiazoles, oxazolidinediones, oxyacetamides, phenoxycarboxylic acids, phenylcarbamates, phenylpyrazoles, phenylpyrazolines, phenylpyridazines, phosphinic acids, phosphoroamidates, phosphorodithioates, phthalamates, pyrazoles, pyridazinones, pyridines, pyridinecarboxylic acids, pyridinecarboxamides, pyrimidinediones, pyrimidinyl(thio)benzoates, quinolinecarboxylic acids, semicarbazones, sulfonylaminocarbonyltriazolinones, sulfonylureas, tetrazolinones, thiadiazoles, thiocarbamates, triazines, triazinones, triazoles, triazolinones, triazolocarboxamides, triazolopyrimidines, triketones, uracils, ureas. Suitable plant growth regulators are antiauxins, auxins, cytokinins, defoliants, ethylene modulators, ethylene releasers, gibberellins, growth inhibitors, morphactins, growth retardants, growth stimulators, and further unclassified plant growth regulators. Suitable micronutrients are compounds comprising boron, zinc, iron, copper, manganese, chlorine, and molybdenum. Suitable nitrification inhibitors are linoleic acid, alpha-linolenic acid, methyl p-coumarate, methyl ferulate, methyl 3-(4-hydroxyphenyl) propionate (MHPP), Karanjin, brachialacton, p-benzoquinone sorgoleone, 2-chloro-6-(trichloromethyl)-pyridine (nitrapyrin or N-serve), dicyandiamide (DCD, DIDIN), 3,4-dimethyl pyrazole phosphate (DMPP, ENTEC), 4-amino-1,2,4-triazole hydrochloride (ATC), 1-amido-2-thiourea (ASU), 2-amino-4-chloro-6-methylpyrimidine (AM), 2-mercapto-benzothiazole (MBT), 5-ethoxy-3-trichloromethyl-1,2,4-thiodiazole (terrazole, etridiazole), 2-sulfanilamidothiazole (ST), ammoniumthiosulfate (ATU), 3-methylpyrazol (3-MP), 3,5-dimethylpyrazole (DMP), 1,2,4-triazol thiourea (TU), N-(1H-pyrazolyl-methyl)acetamides such as N-((3(5)-methyl-1H-pyrazole-1-yl)methyl)acetamide, and N-(1H-pyrazolyl-methyl) formamides such as N-((3(5)-methyl-1H-pyrazole-1-yl)methyl formamide, N-(4-chloro-3(5)-methyl-pyrazole-1-ylmethyl)-formamide, N-(3(5),4-dimethyl-pyrazole-1-ylmethyl)-formamide, neem, products based on ingredients of neem, cyan amide, melamine, zeolite powder, catechol, benzoquinone, sodium terta board, zinc sulfate, 2-(3,4-dimethyl-1H-pyrazol-1-yl)succinic acid (referred to as "DMPSA1" in the following) and/or 2-(4,5-dimethyl-1H-pyrazol-1-yl)succinic acid (referred to as "DMPSA2" in the following), and/or a derivative thereof, and/or a salt thereof; glycolic acid addition salt of 3,4-dimethyl pyrazole (3,4-dimethyl pyrazolium glycolate, referred to as "DMPG" in the following), and/or an isomer thereof, and/or a derivative thereof; citric acid addition salt of 3,4-dimethyl pyrazole (3,4-dimethyl pyrazolium citrate, referred to as "DMPC" in the following), and/or an isomer thereof, and/or a derivative thereof; lactic acid addition salt of 3,4-dimethyl pyrazole (3,4-dimethyl pyrazolium lactate, referred to as "DMPL" in the following), and/or an isomer thereof, and/or a derivative thereof; mandelic acid addition salt of 3,4-dimethyl pyrazole (3,4-dimethyl pyrazolium mandelate, referred to as "DMPM" in the following), and/or an isomer thereof, and/or a derivative thereof; 1,2,4-triazole (referred to as "TZ" in the following), and/or a derivative thereof, and/or a salt thereof; 4-Chloro-3-methylpyrazole (referred to as "CIMP" in the following), and/or an isomer thereof, and/or a derivative thereof, and/or a salt thereof; a reaction adduct of dicyandiamide, urea and formaldehyde, or a triazonyl-formaldehyde-dicyandiamide adduct; 2-cyano-1-((4-oxo-1,3,5-triazinan-1-yl)methyl)guanidine, 1-((2-cyanoguanidino)methyl)urea; 2-cyano-1-((2-cyanoguanidino)methyl)guanidine;

3,4-dimethyl pyrazole phosphate; allylthiourea, and chlorate salts. Examples of envisaged urease inhibitors include N-(n-butyl) thiophosphoric acid triamide (NBPT, Agrotain), N-(n-propyl) thiophosphoric acid triamide (NPPT), 2-nitrophenyl phosphoric triamide (2-NPT), further NXPTs known to the skilled person, phenylphosphorodiamidate (PPD/PPDA), hydroquinone, ammonium thiosulfate, and mixtures of NBPT and NPPT (see e.g. US 8,075,659). Such mixtures of NBPT and NPPT may comprise NBPT in amounts of from 40 to 95% wt.-% and preferably of 60 to 80% wt.-% based on the total amount of active substances. Such mixtures are marketed as LIMUS, which is a composition comprising about 16.9 wt.-% NBPT and about 5.6 wt.-% NPPT and about 77.5 wt.-% of other ingredients including solvents and adjuvants.

The granule may contain the further agrochemical active in a broad range of concentrations, such as from 5 to 95 wt%, preferably from 10 to 80 wt%, more preferably from 25 to 60 wt% based on the total weight of the granule.

The water-dispersible granule is solid at 20 °C. The water-dispersible granule may contain up to 5 wt% of a liquid, preferably up to 3 wt%, more preferably up to 2 wt%, and in particular up to 1 wt% based on the total weight of the granule.

The water-dispersible granule also contains dioctylsulfosuccinate (CAS number 577-11-7). The water-dispersible granule usually contains the dioctylsulfosuccinate in a concentration of from 0.15 to 0.6 wt% based on the total weight of the granule, preferably from 0.175 to 0.5 wt%. The water-dispersible granule may contain the dioctylsulfosuccinate or a satl thereof in a concentration of at least 0.18 wt%, preferably at least 0.2 wt% based on the total weight of the granule. The water-dispersible granule may contain the dioctylsulfosuccinate in a concentration of up to 0.8 wt%, preferably up to 0.5 wt%, more preferably up to 0.4 wt% based on the total weight of the granule.

The water-dispersible granule also contains naphthalenesulfonate formaldehyde condensate. These condensates are obtained by a condensation reaction of naphthalenesulfonate and formaldehyde. Such compounds are alternatively often referred to as alkylnaphthalenesulfonate condensate. As described in Ullmann's Encyclopedia of Industrial Chemistry, 7th Edition, Wiley-VCH Verlag, ISBN 9783527306732, Chapter Naphthalene Derivatives, the condensation reaction of formaldehyde with naphthalenesulfonate yields both the dimer of naphthalenesulfonate according to formula (I) and the polymer according to formula (II) as depicted in Schemes 1 and 2:

Scheme 1:

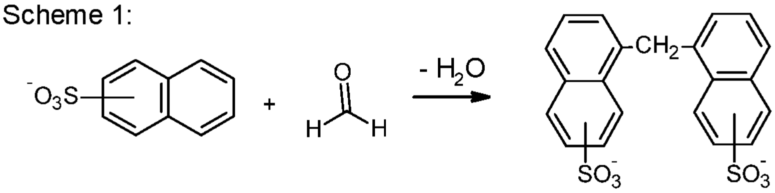


(I)

Scheme 2:

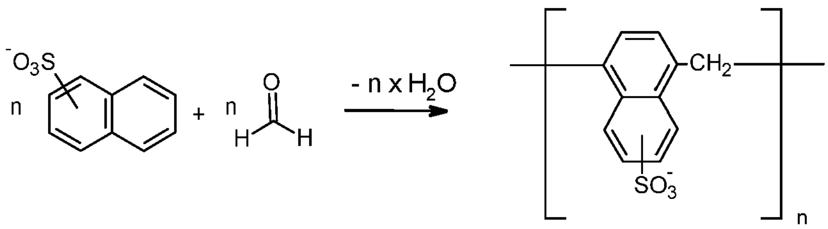


(II)

wherein the index n indicates the number of repeating units in the oligomeric or polymeric condensation product. Typically, the index n ranges from 2 to 1000,000, preferably from 2 to 1,000, such as from 2 to 100.

Accordingly, it will be appreciated that the term naphthalenesulfonate formaldehyde condensate may refer to a mixture to compounds of formula (I) and formula (II) in a wide range of ratios, e.g. a range of weight ratio of compounds of formula (I) to compounds of formula (II) of from 10,000:1 to 1:10,000, preferably from 100:1 to 1:100, more preferably from 10:1 to 1:10. In one embodiment the term "naphthalenesulfonate formaldehyde condensate" refers to compounds of formula (I). In another embodiment, the term "naphthalenesulfonate formaldehyde condensate" refers to compounds of formula (II).

The agrochemical suspension may contain the naphthalenesulfonate formaldehyde condensate in a concentration of from 1.2 to 2.5 wt%, preferably from 1.5 to 2.0 wt% based on the total weight of the granule. The agrochemical suspension may contain the naphthalenesulfonate formaldehyde condensate in a concentration of at least 1.3, preferably at least 1.4 wt% based on the total weight of the granule. The agrochemical suspension may contain the naphthalenesulfonate formaldehyde condensate in a concentration of up to 1.9 wt%, preferably up to 1.8 wt% based on the total weight of the granule.

The weight ratio of the naphthalenesulfonate formaldehyde condensate to the dioctylsulfosuccinate may vary in broad ranges. In one embodiment, the weight ratio of the naphthalenesulfonate formaldehyde condensate to the

dioctylsulfosuccinate may be from 1:1 to 10:1, preferably from 3:1 to 10:1, more preferably from 4:1 to 9:1..

The water-dispersible granule further contains a lignin sulfonate I, wherein the sulfonylation is at the aliphatic moieties of the lignin backbone. It also contains a lignin sulfonate II, wherein the sulfonylation is at least at the aromatic moieties of the lignin backbone.

Lignin is a complex bio-polymer that contains both aromatic and aliphatic moieties. Lignin is derived by reaction of few precursor molecules, such as phenylpropane, coniferyl alcohol, sinapyl alcohol and para-coumaryl alcohol. These precursor molecules contain aromatic phenyl units and hydroxyalkyl and alkoxy moieties, especially methoxy and hydroxypropyl moieties. Accordingly, the lignin sulfonate I contains the sulfonate groups at the aliphatic moieties, such as the methoxy and hydroxylpropyl groups in the form of sulfomethoxy and sulfohydroxypropyl groups. On the other hand, the lignin sulfonate II contains the sulfonate groups at least at the aromatic moieties, i.e. at the phenyl moieties in the lignin backbone.

Due to the harsh reaction conditions that are required to produce lignin sulfonates, it is clear to the skilled person that the sulfonation will never be regioselective. Instead, a mixture of products will be obtained that contain the sulfonate groups at all positions of the lignin backbone, but with different distributions depending on the synthesis method.

Accordingly, the lignin sulfonate I and the lignin sulfonate II will typically contain the sulfonate groups both at the aliphatic and the aromatic moieties. However, the lignosulfonate I typically has the sulfonate groups predominantly at the aliphatic moieties, such as at least 60 mol-%, preferably at least 70 mol-%, more preferably at least 80 wt-%, most preferably at least 90 mol-%, and in particular at least 95 mol-%.

On the other hand, the lignin sulfonate II may typically contain a more balanced proportion of sulfonate groups at the aliphatic and the aromatic moieties. For example, the lignin sulfonate II may contain a molar ratio of sulfonate groups at the aliphatic to aromatic moieties of from 3:1 to 1:3, preferably from 2:1 to 1:2, more preferably from 1.5:1 to 1:1.5, such as from 1.1:1 to 1:1.1.

Lignin sulfonates can be characterized by the degree of sulfonation. The lignin sulfonate I typically has a degree of sulfonation of from 2 to 5 moles per kilogram, preferably from 2.5 to 4 moles per kilogram, more preferably from 3 to 4 moles per kilogram, and especially from 3 to 3.5 moles per kilogram. The lignin sulfonate II typically has a degree of sulfonation of from 2 to 5 moles per kilogram, preferably from 2.5 to 4 moles per kilogram, more preferably from 3 to 4 moles per kilogram, and especially from 3 to 3.5 moles per kilogram.

Lignin sulfonates can also be characterized by their mass average molecular mass ($M_w$), which can be determined by light scattering or sedimentation velocity. The mass average molar mass of lignin sulfonate I is typically from 1,000 to 5,000 g/mol, preferably from 2,000 to 4,000 g/mol, more preferably from 3,000 to 4,000 g/mol, and especially preferably from 3,500 to 4,000 g/mol. The mass average molar mass of lignin sulfonate II is typically from 1,000 to 3,000 g/mol, preferably from 1,500 to 2,500 g/mol, more preferably from 1,800 to 2,300 g/mol.

A further way of characterization of lignin sulfonates is by way of the "z+1 molecular average weight" ($M_{z+1}$). The z+1 average molecular weight, is controlled by the high molecular weight end of a molecular weight distribution. It can be used to indicate the presence or absence of high molecular weight fractions in a product or general shift of a distribution to a higher molecular weight value. The $M_{z+1}$ can be calculated by the following formula

$$M_{z+1} = (\Sigma N_i M_i^4) : (\Sigma N_i M^3),$$

wherein $N_i$ is the number of moles of each polymer species, and $M_i$ is the molar mass of the respective species.

The lignin sulfonate I typically has a z+1 average molecular weight of from 8,000 to 20,000 g/mol, preferably from 10,000 to 15,000 g/mol, more preferably from 10,000 to 12,000 g/mol.

The lignin sulfonate II typically has a z+1 average molecular weight of from 15,000 to 25,000 g/mol, preferably from 16,000 to 20,000 g/mol, more preferably from 17,000 to 19,000 g/mol.

The water-dispersible granule typically contains the lignin sulfonate I in a concentration of from 2.5 to 9 wt%, preferably from 2.5 to 8 wt%, more preferably from 3 to 7 wt%, and in particular from 3.5 to 6 wt% based on the total weight of the granule. The water-dispersible granule may contain the lignin sulfonate I in a concentration of at least 2 wt%, preferably at least 3.5 wt% based on the total weight of the granule. The water-dispersible granule may contain the lignin sulfonate I in a concentration of up to 6 wt%, preferably up to 5.5 wt% based on the total weight of the granule

The water-dispersible granule typically contains the lignin sulfonate II in a concentration of from 2 to 6 wt%, preferably from 3 to 5 wt%, more preferably from 3.5 to 4.5 wt% based on the total weight of the granule. The water-dispersible granule may contain the lignin sulfonate II in a concentration of at least 2.5 wt%, preferably at least 3.8 wt% based on the total weight of the granule. The water-dispersible granule may contain the lignin sulfonate II in a concentration of up to 7 wt%, preferably up to 4.2 wt% based on the total weight of the granule.

The weight ratio of lignin sulfonate I to lignin sulfonate II is typically in a range of from 1:4 to 4:1, preferably from 1:3 to 3:1, more preferably from 1:2 to 2:1.

The water-dispersible granule typically contains filler materials. Fillers are mineral earths, e.g. silicates, silica

gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof. Preferred filler materials are silicates, kaolins, talc, silica gels and clays. The granule usually contains the filler material in a concentration of from 10 to 40 wt%, preferably from 20 to 40 wt%, more preferably from 20 to 35 wt%, such as from 25 to 35 wt% based on the total weight of the granule.

A water-dispersible granule typically comprises a pesticidally effective amount of dimpropyridaz. The term "effective amount" denotes an amount of the composition or of the dimpropyridaz, which is sufficient for controlling invertebrate pests on cultivated plants or in the protection of materials and which does not result in a substantial damage to the treated plants. Such an amount can vary in a broad range and is dependent on various factors, such as the invertebrate species to be controlled, the treated cultivated plant or material, and the climatic conditions.

The water-dispersible granules are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005. Typically, the granules are prepared by contacting components a) to e) in any given order, optionally including the contacting with water, and extruding the resulting composition. The amount of water that is added for the extrusion is typically in an amount of below 5 wt%, such as 2 wt%. The extruded material may then be cut into granules, which are subsequently dried.

The water-dispersible granules may contain at least one auxiliary. Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable surfactants are surface-active compounds, such as anionic, cationic, nonionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkyl naphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-substituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the compound I on the target. Examples are surfactants, mineral or vegetable oils, and other auxiliaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), anorganic clays (organically modified or unmodified), polycarboxylates, and silicates.

Suitable bactericides are bronopol and isothiazolinone derivatives such as alkylisothiazolinones and benzisothiazolinones. Suitable anti-freezing agents are ethylene glycol, propylene glycol, urea and glycerin. Suitable anti-foaming agents are silicones, long chain alcohols, and salts of fatty acids. Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidones, polyvinyl acetates, polyvinyl alcohols, polyacrylates, biological or synthetic waxes, and cellulose ethers.

The invention also relates to an aqueous composition obtained by contacting the water-dispersible granules and water. The granules and the water are usually homogenized by mixing, grinding, or other techniques known in the art. The aqueous composition typically contains from 30 to 99 wt% of water, preferably from 50 to 99 wt%, more preferably from 60 to 95wt%, most preferably from 70 to 95 wt% of water. Accordingly, the aqueous composition comprises from 1 to 70 wt% of the water-dispersible granules, preferably from 1 to 50 wt%, more preferably from 5 to 40 wt%, and most preferably from 5 to 30 wt% of water based on the total weight of the aqueous composition. The aqueous composition is usually a dispersion. The dispersion contains at least the dimpropyridaz active ingredient in form of suspended particles.

The invention also relates to a method of treating plant propagation material comprising the step of contacting the plant propagation material with the aqueous composition.

The water-dispersible granules may be employed for the purposes of treatment of plant propagation materials, particularly seeds. The compositions in question give, after two-to-tenfold dilution, active substance concentrations of from 0.01 to 60% by weight, preferably from 0.1 to 40% by weight, in the ready-to-use preparations. Application can be carried out before or during sowing. Methods for applying dimpropyridaz and compositions thereof, respectively, on to plant propagation material, especially seeds include dressing, coating, pelleting, dusting, soaking and in-furrow application methods of the propagation material. Preferably, the aqueous composition comprising dimpropyridaz is applied on to the plant propagation material by a method such that germination is not induced, e. g. by seed dressing, pelleting, coating and dusting.

The invention also relates to a method for combating or controlling invertebrate pests, which method comprises contacting said pest or its food supply, habitat or breeding grounds with a pesticidally effective amount of the water-dispersible granule or the aqueous composition.

The contacting may be achieved by spraying, irrigation, in-furrow application, drenching and other techniques known to the skilled person. Invertebrate pests relate to a broad spectrum of pests, in particular arachnids and arthropods.

When employed in plant protection, the amounts of dimpropyridaz applied are, depending on the kind of effect desired, from 0.001 to 2 kg per ha, preferably from 0.005 to 2 kg per ha, more preferably from 0.05 to 0.9 kg per ha, and in particular from 0.1 to 0.75 kg per ha.

In treatment of plant propagation materials such as seeds, e. g. by dusting, coating or drenching seed, amounts of dimpropyridaz of from 0.1 to 1000 g, preferably from 1 to 1000 g, more preferably from 1 to 100 g and most preferably from 5 to 100 g, per 100 kilogram of plant propagation material (preferably seeds) are generally required.

When used in the protection of materials or stored products, the amount of dimpropyridaz applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizer, or micronutrients, and further pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the aqueous composition according to the invention usually from a predos-age device, a knapsack sprayer, a spray tank, a spray plane, or an irrigation system. Usually, the aqueous composition is made up with water, buffer, and/or further auxiliaries to the desired application concentration and the ready-to-use spray liquor or the aqueous composition according to the invention is thus obtained. Usually, 20 to 2000 liters, preferably 50 to 400 liters, of the ready-to-use spray liquor are applied per hectare of agricultural useful area.

Advantages: the water-dispersible granule is characterized by a good dispersibility in water, by forming stable and homogeneous aqueous compositions if diluted with water, and by a low degree of dust formation. The following examples illustrate the invention.

Examples

The following ingredients were used for preparing the pesticidal compositions of the examples. Disintegrant: lignin sulfonate, sulfonation at aliphatic side chain groups, weight average molecular weight 3700 Da, degree of sulfonation 3.3 (mol / kg), $Na_2SO_3$ content 9.4 wt%.

Dispersant: lignin sulfonate, sulfonation at aliphatic and aromatic side chain groups, weight average molecular weight 2000 Da, degree of sulfonation 3.4 (mol / kg), $Na_2SO_3$ content 3 wt%. Wetting Agent: 10-20 wt% sodium dioctylsulfosuccinate, 80-90% sodium alkylnaphthalenesulfonate, formaldehyde condensate.
Filler: Kaolin clay

Example 1

Water-dispersible granule formulations with the ingredients as summarized in Tables 1&2 were prepared.

Table 1: Ingredients of water-dispersible granules

| Ingredient | Concentration in (w/w) |
|---|---|
| Dimpropyridaz | 50.00% |
| Disintegrant | According to Table 2 |
| Dispersant | 4.00% |
| Wetting Agent | 2.00% |
| Water | 1.00% |
| Filler | Add to 100% |

The formulations were prepared by mixing the dry ingredients together and hammermilling the resulting composition to deagglomerate the powders and homogenize the mixture. Next the hammermilled mixture was airmilled until the active ingredient reached a D(0.5) particle size between 2.5 - 4.5 um. Then, the airmilled mixture was blended with just enough water to make the mixture bind together to go through the extruder to form granules. Finally, the granules were dried in fluidized air bed dryer until the moisture was approximately 1%.

The resulting water-dispersible granules were then analyzed on their dispersibility in water. To this end, the granules were added in an amount of 2 grams to a cylinder with a diameter of 29.6 mm containing 100 ml of water. The cylinder remained static for two minutes and then the cylinder was reinverted, and the number of inversions were counted. Subsequently, the cylinders containing the aqueous composition were incubated at 20-25 °C for two hours, upon which the amount of sediment was measured. Last, the cylinders containing the aqueous composition were incubated at 20-25 °C for a total of 24 hours, and the number of inversions to restore a homogenous composition was counted. The results of these tests are displayed in Table 2 below.

Table 2: concentration of Disintegrant and results of dispersibility testing.

| Disintegrant Concentration in % (w/w) | Initial number of Inversions | Sediment after 2 Hours | Number of Inversions after 24 Hours |
|---|---|---|---|
| 0% | Good (12) | Unacceptable (11 mL) | Good (7) |
| 2.5% | Good (12) | Borderline Acceptable (1 mL) | Good (8) |
| 5% | Good (14) | Good (< 1 mL) | Good (8) |
| 10% | Borderline Acceptable (17) | Good (< 1 mL) | Unacceptable (20) |
| 15% | Borderline Acceptable (18) | Good (< 1 mL) | Unacceptable (35) |

The results showed that the tested WG formulations best performance when they comprised at least 2.5 wt% but less than 10% Disintegrant. Optimum results were obtained with a concentration of approximately 5 wt%.

Example 2

Water-dispersible granule formulations with the ingredients as summarized in Tables 3&4 were prepared

Table 3: ingredients of water-dispersible granules

| Ingredient | Concentration (w/w) |
|---|---|
| Dimpropyridaz | 50.00% |
| Disintegrant | 2.50% |
| Dispersant | According to Table 4 |
| Wetting Agent | According to Table 4 |
| Water | 1.00% |
| Filler | Add to 100% |

The formulations were prepared by the method described for Example 1. The formulations were then evaluated for dispersibility as described in Example 1. In addition, the dust generation was analyzed with a Heubach Dustmeter. The granules were added in an amount of 50 grams to the dustmeter with a rotation speed of 30 UPM, airflow of 20 1/min, volume of 600 liters, and a time of 1800 seconds. The dust collected by dustmeter then was weighted.

The results are displayed in Table 4.

Table 4: Concentration of Dispersant and Wetting Agent; and results of dispersibility testing and dust formation.

| Concentration of Dispersant in % (w/w) | Concentration of Wetting Agent in % (w/w) | Initial number of Inversions | Sediment after 2 Hours | Number of Inversions after 24 hours | Dust Generated |
|---|---|---|---|---|---|
| 4% | 2% | Good (12) | Borderline Acceptable (1mL) | Good (5) | Good (42 mg) |
| 0% | 2% | Good (10) | Unacceptable (10 mL) | Good (5) | Unacceptable (99.1 mg) |
| 4% | 0% | Good (5) | Borderline Acceptable (1 mL) | Good (5) | Unacceptable (79.4 mg) |
| 0% | 0% | Good (5) | Unacceptable (12 mL) | Good (4) | Unacceptable (208 mg) |

The results show that the formulation requires both the Dispersant and the Wetting Agent to have acceptable dust-off performance.

Example-3:

Water-dispersible granule formulations with the ingredients as summarized in Tables 5&6 were prepared

Table 5: ingredients of water-dispersible granules

| Ingredient | Concentration (w/w) |
|---|---|
| Dimpropyridaz | 50.00% |
| Disintegrant | 5.00% |
| Dispersant | According to Table 6 |
| Wetting Agent | According to Table 6 |
| Water | 1.00% |
| Filler | Add to 100% |

The formulations were prepared by the method described for Example 1. The formulations were then evaluated for dispersibility and dustiness properties as described in Examples 1 and 2. The results are displayed in Table 6.

Table 6: Concentration of Dispersant and Wetting Agent; and results of dispersibility testing and dust formation.

| Concentration of Dispersant % (w/w) | Concentration of Wetting Agent (w/w) | Initial number of Inversions | Sediment after 2 Hours | Number of Inversions after 24 Hours | Dust Generated |
|---|---|---|---|---|---|
| 4% | 2% | Good (15) | Good (< 1mL) | Good (9) | Good (46.6 mg) |
| 4% | 1% | Good (12) | Good (< 1 mL) | Good (7) | Unacceptable (86.4 mg) |
| 2% | 2% | Good (12) | Good (< 1 mL) | Good (5) | Unacceptable (90.6 mg) |
| 2% | 1% | Good (9) | Good (< 1 mL) | Good (6) | Unacceptable (99.7 mg) |

Example-4:

Water-dispersible granule formulations with the ingredients as summarized in Tables 7&8 were prepared

Table 7: ingredients of water-dispersible granules

| Ingredient | Concentration (w/w) |
|---|---|
| Dimpropyridaz | 50.00% |
| Disintegrant | According to Table 8 |
| Dispersant | According to Table 8 |
| Wetting Agent | According to Table 8 |
| Water | 1.00% |
| Filler | Add to 100% |

The formulations were prepared by the method described for Example 1. The formulations were then evaluated for dispersibility and dustiness properties as described in Examples 1 and 2. The results are displayed in Table 8.

Table 8: Concentration of Dispersant, Disintegrant and Wetting Agent; and results of dispersibility testing and dust formation.

| **Concentration of Disintegrant in % (w/w)** | **Concentration of Dispersant in % (w/w)** | **Concentration of Wetting Agent (w/w)** | **Initial number of Inversions** | **Sediment after 2 Hours** | **Number of Inversions after 24 Hours** | **Dust Generated** |
|---|---|---|---|---|---|---|
| 5 | 4 | 2 | Good (16) | Good (< 1mL) | Good (7) | Good (46.8 mg) |
| 10 | 0 | 2 | Good (16) | Good (< 1mL) | Borderline Acceptable (18) | Good (48.9 mg) |
| 5 | 0 | 7 | Unacceptable (23) | Unacceptable (5 mL) | Unacceptable (>20) | Acceptable (58.7 mg) |
| 10 | 4 | 0 | Good (8) | Good (< 1 mL) | Borderline Acceptable (16) | Unacceptable (109.9 mg) |
| 5 | 8 | 0 | Good (7) | Good (< 1 mL) | Unacceptable (>20) | Unacceptable (89.2 mg) |
| 0 | 4 | 7 | Good (13) | Unacceptable (10 mL) | Good (8) | Not measured |
| 0 | 8 | 2 | Good (15) | Borderline Acceptable (2 mL) | Unacceptable (>20) | Borderline Acceptable (69.3 mg) |

## Claims

1. Water-dispersible granule containing

    a) dimpropyridaz;
    b) dioctylsulfosuccinate;
    c) alkylnaphthalenesulfonate formaldehyde condensate;
    d) a lignin sulfonate I, wherein the sulfonylation is at the aliphatic moieties of the lignin backbone;
    e) a lignin sulfonate II, wherein the sulfonylation is at least at the aromatic moieties of the lignin backbone.

2. Granule according to claim 1, wherein the concentration of the dimpropyridaz is at least 25 wt% based on the total weight of the granule.

3. Granule according to any of claims 1 or 2, wherein the concentration of the dioctylsulfosuccinate is from 0.15 to 0.6 wt% based on the total weight of the granule.

4. Granule according to any of claims 1 to 3, wherein the concentration of the alkylnaphthalenesulfonate formaldehyde condensate is 1.2 to 2.5 wt% based on the total weight of the granule.

5. Granule according to any of claims 1 to 4, wherein the weight ratio of component c) to component b) is from 3:1 to 10:1.

6. Granule according to any of claims 1 to 5, wherein the concentration of the lignin sulfonate I is from 2.5 to 8 wt% based on the total weight of the granule.

7. Granule according to any of claims 1 to 6, wherein the concentration of the lignin sulfonate II is from 3 to 5 wt% based on the total weight of the granule.

8. Granule according to any of claims 1 to 7, wherein the weight ratio of the lignin sulfonate I to the lignin sulfonate II is from 1:2 to 2:1.

9. Granule according to any of claims 1 to 8, wherein the lignin sulfonate II contains sulfonate groups both at the aliphatic and the aromatic moieties of the lignin backbone.

10. Granule according to any of claims 1 to 9, wherein the lignin sulfonate I contains from 3 to 4 mol per kilogram of sulfonate groups.

11. Granule according to any of claims 1 to 10, wherein the lignin sulfonate II contains from 3 to 4 mol per kilogram of sulfonate groups.

12. Granule according to any of claims 1 to 11, wherein the lignin sulfonate II has a z+1 average molecular weight of from 15,000 to 25,000 g/mol.

13. A process for producing the water-dispersible granules as defined in any of claims 1 to 12, comprising the step of contacting the components a) to e) in any given order, optionally including the contacting with water, and extruding the resulting composition.

14. An aqueous composition obtained by contacting the water-dispersible granules as defined in any of claims 1 to 12 with water.

15. A method of treating plant propagation material comprising the step of contacting the plant propagation material with the composition as defined in claim 14.

16. A non-therapeutic method for combating or controlling invertebrate pests, which method comprises contacting said pest or its food supply, habitat or breeding grounds with a pesticidally effective amount of the water-dispersible granule as defined in any of claims 1 to 12, or the composition as defined in claim 13.

## Patentansprüche

1. Wasserdispergierbares Granulat enthaltend

   a) Dimpropyridaz;
   b) Dioctylsulfosuccinat;
   c) Alkylnaphthalinsulfonat-Formaldehyd-Kondensat;
   d) ein Ligninsulfonat I, wobei die Sulfonylierung an den aliphatischen Einheiten des Ligningerüsts ist;
   e) ein Ligninsulfonat II, wobei die Sulfonylierung wenigstens an den aromatischen Einheiten des Ligningerüsts ist.

2. Granulat nach Anspruch 1, wobei die Konzentration des Dimpropyridaz wenigstens 25 Gew.-%, bezogen auf das Gesamtgewicht des Granulats, beträgt.

3. Granulat nach einem der Ansprüche 1 oder 2, wobei die Konzentration des Dioctylsulfosuccinats von 0,15 bis 0,6 Gew.-%, bezogen auf das Gesamtgewicht des Granulats, beträgt.

4. Granulat nach einem der Ansprüche 1 bis 3, wobei die Konzentration des Alkylnaphthalinsulfonat-Formaldehyd-Kondensats 1,2 bis 2,5 Gew.-%, bezogen auf das Gesamtgewicht des Granulats, beträgt.

5. Granulat nach einem der Ansprüche 1 bis 4, wobei das Gewichtsverhältnis von Komponente c) zu Komponente b) von 3:1 bis 10:1 beträgt.

6. Granulat nach einem der Ansprüche 1 bis 5, wobei die Konzentration des Ligninsulfonats I von 2,5 bis 8 Gew.-%, bezogen auf das Gesamtgewicht des Granulats, beträgt.

7. Granulat nach einem der Ansprüche 1 bis 6, wobei die Konzentration des Ligninsulfonats II von 3 bis 5 Gew.-%, bezogen auf das Gesamtgewicht des Granulats, beträgt.

8. Granulat nach einem der Ansprüche 1 bis 7, wobei das Gewichtsverhältnis des Ligninsulfonats I zu dem Ligninsulfonat II von 1:2 bis 2:1 beträgt.

9. Granulat nach einem der Ansprüche 1 bis 8, wobei das Ligninsulfonat II Sulfonatgruppen sowohl an den aliphatischen als auch den aromatischen Einheiten des Ligningerüsts enthält.

10. Granulat nach einem der Ansprüche 1 bis 9, wobei das Ligninsulfonat I von 3 bis 4 mol pro Kilogramm Sulfonatgruppen enthält.

11. Granulat nach einem der Ansprüche 1 bis 10, wobei das Ligninsulfonat II von 3 bis 4 mol pro Kilogramm Sulfonatgruppen enthält.

12. Granulat nach einem der Ansprüche 1 bis 11, wobei das Ligninsulfonat II ein z+1-gemitteltes Molekulargewicht von 15.000 bis 25.000 g/mol aufweist.

13. Verfahren zur Herstellung des wasserdispergierbaren Granulats nach einem der Ansprüche 1 bis 12, umfassend den Schritt des Inkontaktbringens der Komponenten a) bis e) in beliebiger gegebener Reihenfolge, gegebenenfalls einschließlich Inkontaktbringen mit Wasser, und Extrudieren der erhaltenen Zusammensetzung.

14. Wässrige Zusammensetzung, erhalten durch Inkontaktbringen des wasserdispergierbaren Granulats nach einem der Ansprüche 1 bis 12 mit Wasser.

15. Verfahren zur Behandlung von Pflanzenvermehrungsmaterial, umfassend den Schritt des Inkontaktbringens des Pflanzenvermehrungsmaterials mit der Zusammensetzung nach Anspruch 14.

16. Nichttherapeutisches Verfahren zur Bekämpfung oder Beherrschung von wirbellosen Schädlingen, wobei das Verfahren Inkontaktbringen des Schädlings oder seiner Nahrungsquelle, seines Lebensraums oder seiner Brutgebiete mit einer pestizid wirksamen Menge des wasserdispergierbaren Granulats nach einem der Ansprüche 1 bis 12 oder der Zusammensetzung nach Anspruch 13 umfasst.

## Revendications

**1.** Granulé dispersible dans l'eau contenant

a) du dimpropyridaz ;
b) du sulfosuccinate de dioctyle ;
c) un condensat de naphtalènesulfonate d'alkyle et de formaldéhyde ;
d) un sulfonate de lignine I, la sulfonylation étant située au niveau des fragments aliphatiques du squelette de lignine ;
e) un sulfonate de lignine II, la sulfonylation étant située au moins au niveau des fragments aromatiques du squelette de lignine.

**2.** Granulé selon la revendication 1, dans lequel la concentration du dimpropyridaz est supérieure ou égale à 25 % en poids par rapport au poids total du granulé.

**3.** Granulé selon l'une quelconque des revendications 1 ou 2, dans lequel la concentration du sulfosuccinate de dioctyle est comprise entre 0,15 et 0,6 % en poids par rapport au poids total du granulé.

**4.** Granulé selon l'une quelconque des revendications 1 à 3, dans lequel la concentration du condensat de naphtalènesulfonate d'alkyle et de formaldéhyde est comprise entre 1,2 et 2,5 % en poids par rapport au poids total du granulé.

**5.** Granulé selon l'une quelconque des revendications 1 à 4, dans lequel le rapport pondéral du composant c) au composant b) est compris entre 3:1 et 10:1.

**6.** Granulé selon l'une quelconque des revendications 1 à 5, dans lequel la concentration du sulfonate de lignine I est comprise entre 2,5 et 8 % en poids par rapport au poids total du granulé.

**7.** Granulé selon l'une quelconque des revendications 1 à 6, dans lequel la concentration du sulfonate de lignine II est comprise entre 3 et 5 % en poids par rapport au poids total du granulé.

**8.** Granulé selon l'une quelconque des revendications 1 à 7, dans lequel le rapport pondéral du sulfonate de lignine I au sulfonate de lignine II est compris entre 1:2 et 2:1.

**9.** Granulé selon l'une quelconque des revendications 1 à 8, dans lequel le sulfonate de lignine II contient des groupes sulfonate à la fois au niveau des fragments aliphatiques et aromatiques du squelette de lignine.

**10.** Granulé selon l'une quelconque des revendications 1 à 9, dans lequel le sulfonate de lignine I contient de 3 à 4 moles par kilogramme de groupes sulfonate.

**11.** Granulé selon l'une quelconque des revendications 1 à 10, dans lequel le sulfonate de lignine II contient de 3 à 4 moles par kilogramme de groupes sulfonate.

**12.** Granulé selon l'une quelconque des revendications 1 à 11, dans lequel le sulfonate de lignine II présente une masse moléculaire moyenne z+1 comprise entre 15 000 et 25 000 g/mol.

**13.** Procédé de production de granulés dispersibles dans l'eau tels que définis dans l'une quelconque des revendications 1 à 12, comprenant l'étape de mise en contact des composants a) à e) dans un ordre quelconque, comprenant facultativement la mise en contact avec de l'eau, et l'extrusion de la composition obtenue.

**14.** Composition aqueuse obtenue par mise en contact des granulés dispersibles dans l'eau tels que définis dans l'une quelconque des revendications 1 à 12 avec de l'eau.

**15.** Procédé de traitement de matériel de propagation végétale comprenant l'étape de mise en contact du matériel de propagation végétale avec la composition telle que définie dans la revendication 14.

**16.** Procédé non thérapeutique pour la lutte contre ou la régulation d'invertébrés nuisibles, lequel procédé comprend la mise en contact dudit organisme nuisible ou de son approvisionnement en nourriture, son habitat ou ses lieux de

reproduction avec une quantité efficace sur le plan pesticide du granulé dispersible dans l'eau tel que défini dans l'une quelconque des revendications 1 à 12 ou de la composition telle que définie dans la revendication 13.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2020144308 A1
- WO 2012143317 A
- EP 19151447
- US 8075659 B

### Non-patent literature cited in the description

- Pesticide Manual. The British Crop Protection Council, 2013
- Naphthalene Derivatives. Ullmann's Encyclopedia of Industrial Chemistry. Wiley-VCH Verlag
- **MOLLET** ; **GRUBEMANN**. Formulation technology. Wiley VCH, 2001
- Emulsifiers & Detergents. McCutcheon's. McCutcheon's Directories, 2008, vol. 1
- Adjuvants and additives. **KNOWLES**. Agrow Reports DS256. T&F Informa, 2006